# EUROPÄISCHE PATENTANMELDUNG

(11) **EP 1 431 540 A2**
(43) Veröffentlichungstag der Anmeldung: **23.06.2004**
(21) Anmeldenummer: 03014384.6
(22) Anmeldetag: 26.06.2003
(51) Int. Cl.: F02B 29/04, F02D 41/00

(54) **Brennkraftmaschine**

(30) Priorität: 20.12.2002 DE 10259926
(71) Anmelder: ROBERT BOSCH GMBH, 70442 Stuttgart (DE)
(72) Erfinder: Heinstein, Axel, 71299 Wimsheim (DE); Storch, Axel, 71696 Moeglingen (DE); Pilgram, Guido, 71701 Schwieberdingen (DE); Ries-Mueller, Klaus, 74906 Bad Rappenau (DE); Nowak, Detlef, 74199 Untergruppenbach (DE)

(57) **Zusammenfassung**

Eine Brennkraftmaschine (10) umfasst eine Einrichtung (22) zur Komprimierung der Ansaugluft sowie eine Kühleinrichtung (33) zur Kühlung der komprimierten Luft. Mittels einer Einspritzvorrichtung (34) kann der Kraftstoff direkt in einen Brennraum (12) eingespritzt werden. Um das Verbrauchs- und Emissionsverhalten der Brennkraftmaschine (10) zu verbessern, wird vorgeschlagen, dass die Kühleinrichtung (33) mit mindestens einem zusätzlichen Wärmetauscher (54) verbunden ist, welcher den der Einspritzvorrichtung (34) zugeführten Kraftstoff und/oder einen Einbaubereich der Einspritzvorrichtung kühlt.

## Beschreibung

### Stand der Technik

Die Erfindung betrifft eine Brennkraftmaschine, mit einer Einrichtung zur Komprimierung der Ansaugluft, mit einer Kühleinrichtung zur Kühlung der komprimierten Ansaugluft, und mit einer Einspritzvorrichtung, mit der der Kraftstoff direkt in einen Brennraum eingespritzt werden kann.

Eine derartige Brennkraftmaschine ist aus der DE 100 65 266 A1 bekannt. Bei dieser wird die Ansaugluft in einem Turbolader verdichtet, anschließend in einem Ladeluftkühler gekühlt und dann dem Brennraum zugeführt. Der Kraftstoff gelangt über einen Injektor direkt in den Brennraum.

Es wäre wünschenswert, die bekannte Brennkraftmaschine mit einem strahlgeführten Brennverfahren betreiben zu können. Bei diesem Brennverfahren ist der Injektor zentral über dem Brennraumquerschnitt angeordnet. Es wurde jedoch festgestellt, dass es hierbei mit der Zeit zu einer Erhöhung der Emissionen kommen kann, und dass sich über die Lebensdauer der Brennkraftmaschine gegebenenfalls die Qualität der Verbrennung verschlechtern kann.

Die vorliegende Erfindung hat daher die Aufgabe, eine Brennkraftmaschine der eingangs genannten Art so weiterzubilden, dass bei ihr über einen möglichst langen Zeitraum gute Emissionswerte erzielt werden können und eine gute Qualität der Verbrennung beibehalten werden kann. Dabei soll die Brennkraftmaschine gleichzeitig möglichst preiswert gebaut werden können.

Diese Aufgabe wird bei einer Brennkraftmaschine der eingangs genannten Art dadurch gelöst, dass die Kühleinrichtung, mit der die komprimierte Ansaugluft gekühlt wird, mit mindestens einem Wärmetauscher verbunden ist, welcher den Kraftstoff, der der Einspritzvorrichtung zugeführt wird, und/oder einen Einbaubereich der Einspritzvorrichtung, und/oder die Einspritzvorrichtung selbst kühlt.

### Vorteile der Erfindung

Bei der erfindungsgemäßen Brennkraftmaschine können die Temperaturen an der Injektorspitze vergleichsweise niedrig gehalten werden. Hierdurch wird die Gefahr reduziert, dass sich an der Injektorspitze Stoffe ablagern. Durch die Ablagerung solcher Stoffe können die Spritzlöcher des Injektors zugesetzt werden, was die Ausbildung einer gewünschten Strahlform und auch die Realisierung einer gewünschten Kraftstoffmenge bei einer Einspritzung erschwert. Dadurch, dass bei der erfindungsgemäßen Brennkraftmaschine derartige Ablagerungen verhindert oder zumindest verzögert werden, bleibt eine optimale Ausbildung des Kraftstoffstrahles, welcher aus dem Injektor austritt, über einen langen Zeitraum gewährleistet. Eine optimale Ausbildung des Kraftstoffstrahles führt jedoch wiederum, zu günstigen Emissions- und Verbrauchswerten.

Die Kühlung der Injektorspitze wird erfindungsgemäß auf besonders einfache Art und Weise bewirkt: Es wird nämlich das ohnehin vorhandene Kühlsystem, mit dem die komprimierte Ansaugluft gekühlt wird (Ladeluftkühlung) dazu verwendet, wenigstens mittelbar auch den Injektor zu kühlen. Dies kann erfindungsgemäß dadurch geschehen, dass der Kraftstoff, welcher dem Injektor zugeführt wird, gekühlt wird, es kann aber auch unmittelbar der Injektor oder ein in dessen unmittelbarer Nähe gelegener Einbaubereich gekühlt werden.

Die Verwendung der Kühleinrichtung, mit der die komprimierte Ansaugluft gekühlt wird, hat gegenüber einer Verwendung der allgemeinen Kühleinrichtung der Brennkraftmaschine den Vorteil, dass die Temperatur des im Ansaugluft-Kühlsystem verwendeten Kühlmediums üblicherweise vergleichsweise niedrig ist. So liegt die Temperatur des Kühlmediums eines Ladeluftkühlers üblicherweise bei ungefähr 40 - 50°C, wohingegen das Kühlwasser der allgemeinen Kühlung einer Brennkraftmaschine ein deutlich höheres Temperaturniveau aufweist. Die Verwendung der Kühleinrichtung, mit der die komprimierte Ansaugluft gekühlt wird, zur Kühlung der Injektorspitze ist also sehr effektiv und gleichzeitig auch preiswert, da die Kühleinrichtung zur Kühlung der komprimierten Ansaugluft ja ohnehin vorhanden ist.

Ein weiterer Vorteil der erfindungsgemäßen Kühlung der Injektorspitze besteht darin, dass die Neigung der Brennkraftmaschine zu einer klopfenden Verbrennung in bestimmten Betriebszuständen reduziert werden kann. Dies kann bei einer gegebenenfalls ebenfalls vorhandenen Klopfregelung berücksichtigt werden.

Vorteilhafte Weiterbildungen der Erfindung sind in Unteransprüchen angegeben.

In einer ersten Weiterbildung wird vorgeschlagen, dass mindestens ein Wärmetauscher mit einer Kraftstoffzuführung stromabwärts von einer Hochdruckpumpe thermisch gekoppelt ist. Die Temperatur des Kraftstoffs ist in diesem Bereich aufgrund der Kompression vergleichsweise hoch, was die Effizienz der Kühlung steigert.

Ferner ist es möglich, dass mindestens ein Wärmetauscher mit einer Kraftstoff-Sammelleitung thermisch gekoppelt ist, an die die Einspritzvorrichtung angeschlossen ist. Bei Brennkraftmaschinen mit Kraftstoff-Direkteinspritzung ist üblicherweise eine derartige Kraftstoff-Sammelleitung vorhanden. Sie wird im Allgemeinen als "Rail" bezeichnet. In dieser Kraftstoff-Sammelleitung ist der Kraftstoff unter hohem Druck gespeichert. Eine Kühlung der Kraftstoff-Sammelleitung ist thermisch besonders effektiv, da der dort gespeicherte Kraftstoff aufgrund der Kompression und aufgrund von Wärmeleitung vom Motorblock der Brennkraftmaschine her eine im Vergleich zum Kühlmedium der Kühleinrichtung hohe Temperatur aufweist. An dieser Stelle ist die Kühlung besonders effektiv. Darüber hinaus ist die Kraftstoff-Sammelleitung im Allgemeinen gut zugänglich, so dass die erfindungsgemäße thermische Kopplung leicht realisiert werden kann. In konkreter Ausgestaltung kann dies beispielsweise dadurch geschehen, dass der Wärmetauscher einen Strömungsraum für das Kühlmittel in einer Wand der Kraftstoff-Sammelleitung umfasst.

Eine weitere vorteilhafte Ausgestaltung der erfindungsgemäßen Brennkraftmaschine besteht darin, dass mindestens ein Wärmetauscher mit einem Zylinderkopf thermisch gekoppelt ist, in den die Einspritzvorrichtung eingebaut ist. Auch diese Weiterbildung der erfindungsgemäßen Brennkraftmaschine hat den Vorteil, dass der Wärmetauscher aufgrund des hohen Temperaturgefälles zwischen Kühlmedium und dem zu kühlenden Bereich besonders effektiv arbeitet.

In konkreter Ausgestaltung kann die thermische Kopplung darin bestehen, dass der Wärmetauscher einen Strömungsraum für das Kühlmittel im Zylinderkopf umfasst, der in unmittelbarer Nähe zu der Einspritzvorrichtung liegt. Dabei kann ein solcher Strömungsraum zusätzlich zu der normalen Kühlung des Zylinderkopfes vorhanden sein, er kann jedoch auch die ausschließliche Kühlung des Zylinderkopfes bilden.

Vorgeschlagen wird auch, dass zwischen dem Wärmetauscher und der Kühleinrichtung eine Beeinflussungseinrichtung vorhanden ist, mit der die Kühlleistung beeinflusst werden kann. Damit kann erreicht werden, dass die Kühlung der Injektorspitze an die aktuellen Betriebsbedingungen der Brennkraftmaschine optimal angepasst werden kann.

Dies ist besonders gut möglich, wenn die Beeinflussungseinrichtung mit einem Steuer- und/oder Regelgerät verbunden ist und abhängig vom Signal mindestens einer Betriebsgröße und/oder von einem Betriebszustand der Brennkraftmaschine angesteuert wird. Auf diese Weise ist sogar denkbar, dass die Injektorspitze unter bestimmten Umständen gewärmt werden kann, beispielsweise nach einem Kaltstart der Brennkraftmaschine. Dies ermöglicht eine Verbesserung der HC-Emissionen aufgrund einer besseren Gemischaufbereitung.

Vorteilhaft ist es auch, wenn die Beeinflussungseinrichtung eine elektrische Kühlmittelpumpe mit veränderlicher Drehzahl und/oder eine ansteuerbare Ventileinrichtung umfasst. Derartige Ausgestaltungen einer Beeinflussungseinrichtung sind technisch einfach und preiswert zu realisieren und ermöglichen eine spontane Anpassung der Kühlleistung der Kühleinrichtung an die jeweiligen Betriebserfordernisse.

### Zeichnung

Nachfolgend werden besonders bevorzugte Ausführungsbeispiele einer erfindungsgemäßen Brennkraftmaschine unter Bezugnahme auf die beiliegende Zeichnung im Detail erläutert. In der Zeichnung zeigen:
- Figur 1:: eine schematische Prinzipdarstellung eines ersten Ausführungsbeispiels einer Brennkraftmaschine, bei der der zugeführte Kraftstoff von einer Kühleinrichtung gekühlt wird;
- Figur 2:: eine detailliertere Darstellung der Kühleinrichtung von Figur 1;
- Figur 3:: eine schematische Prinzipdarstellung eines zweiten Ausführungsbeispiels einer Brennkraftmaschine, bei der eine Kraftstoff-Sammelleitung von einer Kühleinrichtung gekühlt wird;
- Figur 4:: eine vergrößerte Darstellung der Kraftstoff-Sammelleitung von Figur 3;
- Figur 5:: einen Schnitt längs der Linie V-V von Figur 4;
- Figur 6:: eine schematische Prinzipdarstellung eines dritten Ausführungsbeispiels einer Brennkraftmaschine, bei der ein unmittelbar neben einem Injektor gelegener Bereich eines Zylinderkopfs von einer Kühleinrichtung gekühlt wird; und
- Figur 7:: einen Schnitt durch einen Bereich eines Zylinderkopfes unmittelbar in der Nähe des Injektors von Figur 6.

### Beschreibung der Ausführungsbeispiele

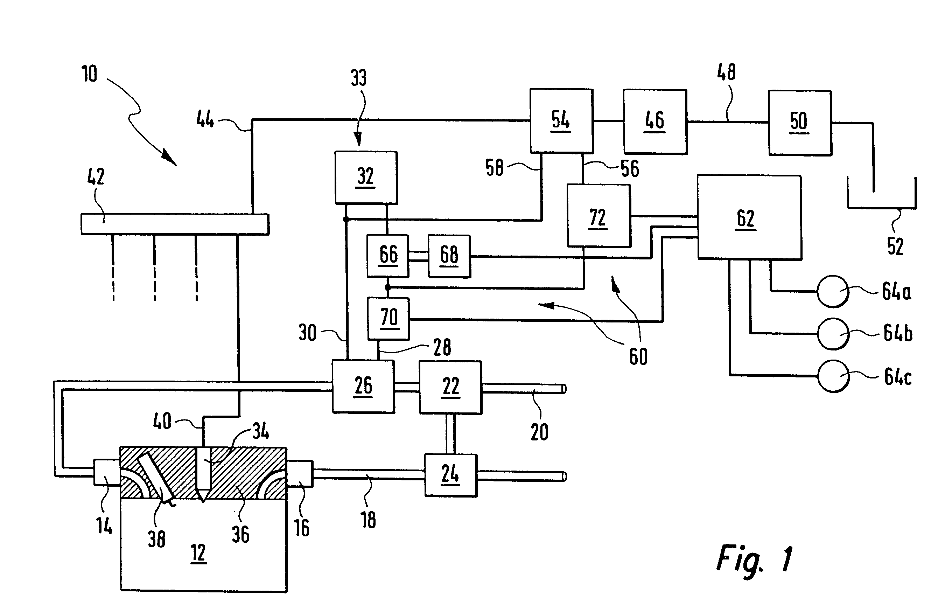

In Figur 1 trägt eine Brennkraftmaschine insgesamt das Bezugszeichen 10. Sie kommt in einem Kraftfahrzeug (nicht dargestellt) zum Einsatz und dient zu dessen Antrieb. Es sei gleich an dieser Stelle angemerkt, dass in Figur 1 und auch in den nachfolgenden Figuren nicht alle zum Betrieb der Brennkraftmaschine 10 erforderlichen Teile dargestellt sind, sondern nur jene, die im vorliegenden Falle besonders relevant sind.

Die Brennkraftmaschine 10 umfasst mehrere Brennräume, von denen in Figur 1 nur einer dargestellt ist. Er trägt das Bezugszeichen 12. Verbrennungsluft gelangt in den Brennraum über ein Einlassventil 14. Die Verbrennungsabgase werden aus dem Brennraum 12 über ein Auslassventil 16 und ein Abgasrohr 18 abgeleitet. Die Ansaugluft gelangt zum Einlassventil 14 über ein Ansaugrohr 20. Die angesaugte Luft wird in einem Kompressor 22 komprimiert. Der Kompressor 22 wird mechanisch von einer Turbine 24 angetrieben, die im Abgasrohr 18 angeordnet ist. Die aus Kompressor 22 und Turbine 24 bestehende Einheit wird auch als "Turbolader" bezeichnet.

Zwischen dem Kompressor 22 und dem Einlassventil 14 wird die Ansaugluft von einem ersten Wärmetauscher 26 gekühlt, welcher von einem Kühlmittel durchströmt und auch als "Ladeluftkühler" oder "Intercooler" bezeichnet wird. Der erste Wärmetauscher 26 ist über eine Kühlmittelzuleitung 28 und eine Kühlmittelableitung 30 mit einem zweiten Wärmetauscher 32 verbunden. Durch diesen wird Wärme zwischen dem Kühlmittel und der Umgebungsluft ausgetauscht. Die beiden Wärmetauscher 26 und 32 und die Leitungen 28 und 30 bilden eine Kühleinrichtung 33.

Kraftstoff gelangt in den Brennraum 12 durch einen Injektor 34, der in einem Zylinderkopf 36 an zentraler Stelle über dem Querschnitt des Brennraums 12 angeordnet ist. Der in den Brennraum 12 vom Injektor 34 direkt eingespritzte Kraftstoff wird von einer Zündkerze 38 entflammt. Bei der in Figur 1 dargestellten Brennkraftmaschine 10 handelt es sich also um eine solche mit Benzin-Direkteinspritzung. Grundsätzlich sind die gezeigten Komponenten aber auch bei einer Brennkraftmaschine mit Diesel-Direkteinspritzung einsetzbar.

Der Injektor 34 ist über eine Hochdruck-Kraftstoffleitung 40 an eine Kraftstoff-Sammelleitung 42 angeschlossen. Diese wird auch als "Rail" bezeichnet. An die Kraftstoff-Sammelleitung 42 sind auch die Injektoren anderer Zylinder der Brennkraftmaschine 10 angeschlossen. In der Kraftstoff-Sammelleitung 42 ist der Kraftstoff unter sehr hohem Druck gespeichert. Der Kraftstoff wird der Kraftstoff-Sammelleitung 42 über eine Hochdruck-Kraftstoffleitung 44 von einer Hochdruck-Kraftstoffpumpe 46 zugeführt.

Die Hochdruck-Kraftstoffpumpe 46 wird mechanisch von einer nicht dargestellten Nockenwelle der Brennkraftmaschine 10 angetrieben. Die Hochdruck-Kraftstoffpumpe 46 erhält den Kraftstoff wiederum von einer Niederdruck-Kraftstoffleitung 48, die von einer elektrischen Kraftstoffpumpe 50 gespeist wird. Diese wird auch als "Vorförderpumpe" bezeichnet. Die elektrische Kraftstoffpumpe 50 fördert den Kraftstoff aus einem Kraftstoffbehälter 52.

In der Hochdruck-Kraftstoffleitung 44 zwischen der Hochdruck-Kraftstoffpumpe 46 und der Kraftstoff-Sammelleitung 42 ist ein dritter Wärmetauscher 54 angeordnet. Dieser ist über eine Kühlmittelzuleitung 56 an die Kühlmittelzuleitung 28 und über eine Kühlmittelableitung 58 an die Kühlmittelableitung 30 und somit letztlich ebenfalls an den zweiten Wärmetauscher 32 angeschlossen.

Die Brennkraftmaschine 10 umfasst auch eine Beeinflussungseinrichtung 60, mit der die Kühlleistung der Wärmetauscher 32 und 54 beeinflusst werden kann. Hierzu ist die Beeinflussungseinrichtung 60 mit einem Steuer- und Regelgerät 62 verbunden, welches wiederum Signale von Sensoren 64a, 64b und 64c erhält. Mittels dieser Sensoren werden für den Betrieb der Brennkraftmaschine 10 wichtige Betriebsgrößen erfasst, und im Steuer- und Regelgerät 62 wird mittels dieser Signale ein Betriebszustand der Brennkraftmaschine 10 festgestellt. Hierauf wird weiter unten noch im Detail eingegangen.

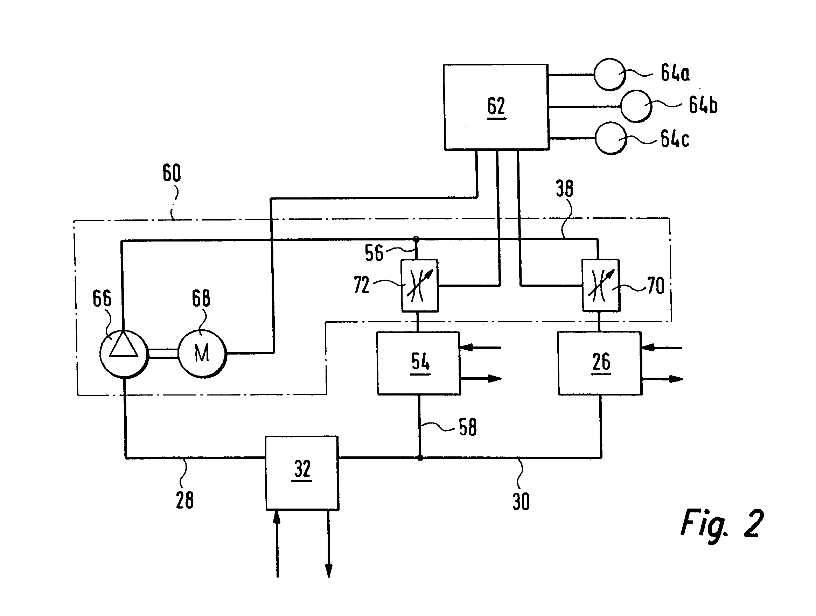

Die Beeinflussungseinrichtung (vergleiche auch Figur 2) umfasst eine Kühlmittelpumpe 66, welche von einem Elektromotor 68 angetrieben wird. Die Kühlmittelpumpe 66 ist in der Kühlmittelzuleitung 28 angeordnet, welche zu dem Wärmetauscher 32 führt. Der Elektromotor 68 kann vom Steuer- und Regelgerät angesteuert und so dessen Drehzahl beeinflusst werden.

In der Kühlmittelzuleitung 28, welche zum ersten Wärmetauscher 26, also zum "Intercooler", führt, ist ein Proportionalsteuerventil 70 angeordnet. Dieses wird ebenfalls vom Steuer- und Regelgerät 62 angesteuert, so dass der Kühlmittelstrom durch den ersten Wärmetauscher 26 hindurch stufenlos eingestellt werden kann. Analog hierzu ist in der Kühlmittelzuleitung 56, welche zum dritten Wärmetauscher 54 führt, ein Proportionalsteuerventil 72 angeordnet, welches ebenfalls vom Steuer- und Regelgerät 62 angesteuert wird. Mit dem Proportionalsteuerventil 72 kann der Kühlmittelstrom durch den dritten Wärmetauscher 54 hindurch stufenlos eingestellt werden. Die Kühlmittelpumpe 66 mit dem Elektromotor 68 sowie die beiden Proportionalsteuerventile 70 und 72 bilden die Beeinflussungseinrichtung 60.

Die Brennkraftmaschine 10 arbeitet folgendermaßen:

Die vom Kompressor 22 komprimierte Ansaugluft wird im ersten Wärmetauscher 26 durch das durch diesen hindurchströmende Kühlmittel (beispielsweise Kühlwasser) gekühlt. Die derart abgekühlte komprimierte Ansaugluft gelangt dann in den Brennraum 12. Durch Einspritzung von Kraftstoff mittels des Injektors 34 wird im Brennraum 12 ein Kraftstoff-Luft-Gemisch erzeugt, welches von der Zündkerze 38 entzündet wird.

Durch den Wärmeaustausch im Wärmetauscher 26 wird das Kühlmittel erwärmt. Über die Kühlmittelableitung 30 wird das erwärmte Kühlwasser dem zweiten Wärmetauscher 32 zugeführt. Dieser wird von der Umgebungsluft umströmt. Hierdurch wird das Kühlmittel abgekühlt. Das übliche Temperaturniveau des Kühlmittels beim Verlassen des zweiten Wärmetauschers 32 beträgt circa 40 - 50°C.

Über die Kühlmittelzuleitung 56 und das Proportionalsteuerventil 72 gelangt das Kühlmittel auch zum dritten Wärmetauscher 54, der in der Hochdruck-Kraftstoffleitung 44 zwischen der Kraftstoff-Sammelleitung 42 und der Kraftstoff-Hochdruckpumpe 46 angeordnet ist. Der Wärmetauscher 54 wird also einerseits vom Kühlmittel und andererseits von dem durch die Kraftstoff-Hochdruckpumpe 46 auf einen sehr hohen Druck komprimierten Kraftstoff durchströmt. Aufgrund von Wärmeleitung und aufgrund der Kompression hat der zuströmende Kraftstoff in diesem Bereich eine vergleichsweise hohe Temperatur. Durch die Kühlung mit dem ungefähr 40 - 50°C-warmen Kühlmedium kann im Wärmetauscher 54 die Temperatur des Kraftstoffs wirksam reduziert werden.

Entsprechend ist auch die Temperatur stromabwärts vom Wärmetauscher 54, also in der Kraftstoff-Sammelleitung 42 selbst, in der Hochdruck-Kraftstoffleitung 40 und letztlich auch im Injektor 34 vergleichsweise niedrig. Diese Temperaturabsenkung bewirkt, dass die in den Brennraum 12 ragende Spitze des Injektors 34 eine vergleichsweise geringe Temperatur aufweist. Somit ist das Risiko, dass sich an der Spitze des Injektors 34, und hier insbesondere an den Spritzlöchern des Injektors 34, Ablagerungen bilden, reduziert. Dies insbesondere auch obwohl der Injektor 34 an einer Stelle des Brennraums 12 angeordnet ist, an der die Temperaturbelastung vergleichsweise hoch ist.

Mittels der Proportionalsteuerventile 70 und 72 und der einstellbaren Drehzahl der Pumpe 66 ist eine für den jeweiligen Betriebszustand der Brennkraftmaschine 10 optimale Kühlwirkung einerseits der komprimierten Ansaugluft durch den Wärmetauscher 26 und andererseits des Kraftstoffs beziehungsweise letztlich des Injektors 34 durch den Wärmetauscher 54 möglich. So ist beispielsweise denkbar, dass eine Kühlung des Injektors 34 nur im Bereich der oberen Teillast der Brennkraftmaschine 10 erfolgt.

Denkbar ist aber auch, dass unmittelbar nach einem Kaltstart durch eine Erwärmung des Kraftstoffes die HC-Emissionen der Brennkraftmaschine 10 reduziert werden. Dem liegt der Gedanke zugrunde, dass ein warmer Kraftstoff vom Injektor 34 besser zerstäubt werden kann. Auch die Kühlung der Ansaug- beziehungsweise Ladeluft kann an die Betriebsverhältnisse der Brennkraftmaschine 10 angepasst werden. So ist ebenfalls denkbar, dass bei Teillast der Brennkraftmaschine 10 die Ansaugluft erwärmt wird, was zu einer zusätzlichen Entdrosselung führt. Bei höherer Last dagegen wird die Ansaugluft gekühlt, was eine geringere Klopfneigung und eine Erhöhung der Zylinderfüllung zur Folge hat.

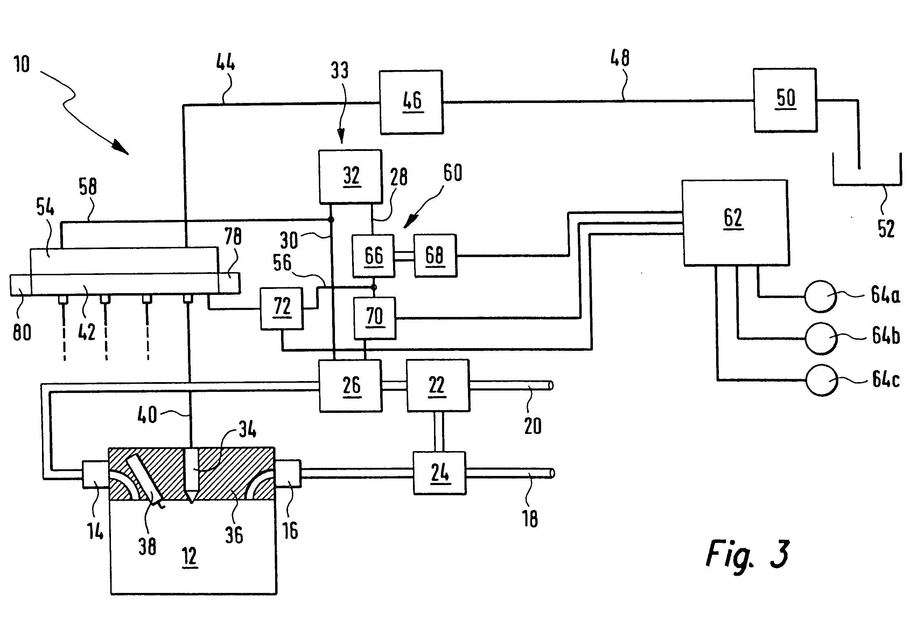

In Figur 3 ist ein zweites Ausführungsbeispiel einer Brennkraftmaschine 10 dargestellt. Dabei tragen solche Elemente und Bereiche, welche äquivalente Funktionen zu Elementen und Bereichen des in den Figuren 1 und 2 dargestellten Ausführungsbeispieles aufweisen, die gleichen Bezugszeichen. Sie sind nicht nochmals im Detail erläutert.

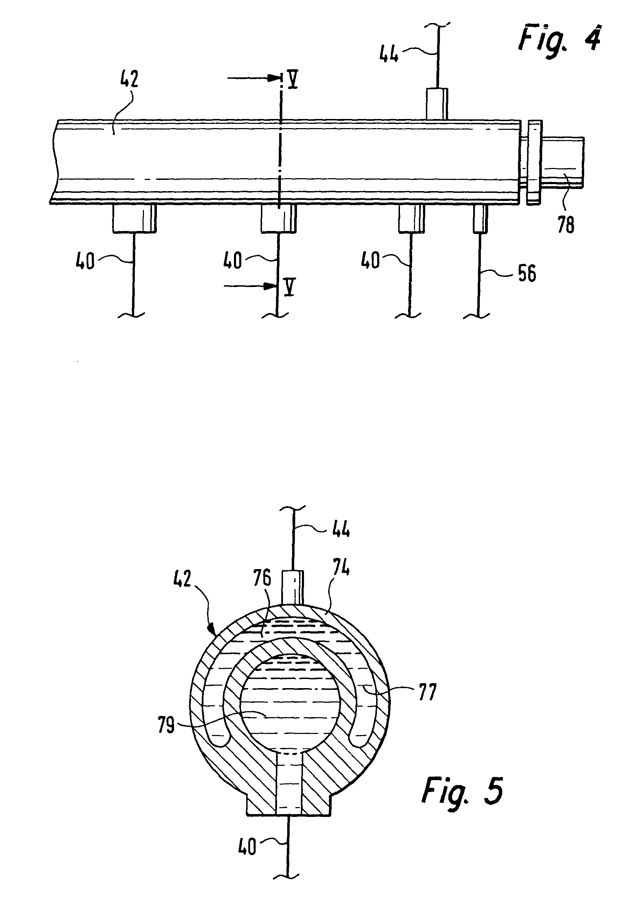

Im Gegensatz zu dem Ausführungsbeispiel der Figuren 1 und 2 ist bei der Brennkraftmaschine 10 von Figur 3 der Wärmetauscher 54, welcher letztlich zur Kühlung des Injektors 34 dient, thermisch unmittelbar mit der Kraftstoff-Sammelleitung 42 gekoppelt. Wie aus den Figuren 4 und 5 ersichtlich ist, ist hierzu in einer Umfangswand 74 der Kraftstoff-Sammelleitung 42 ein sich in etwa über den halben Umfang und in etwa über die gesamte Länge der Kraftstoff-Sammelleitung 42 erstreckender Strömungsraum 76 vorhanden, der vom Kühlmittel 77, welches vom Wärmetauscher 32 kommt, durchströmt wird.

Auf diese Weise wird die Kraftstoff-Sammelleitung 42 und der darin gespeicherte Kraftstoff 79 gekühlt, unmittelbar bevor er über die Hochdruck-Kraftstoffleitung 40 zum Injektor 34 gelangt. In den Figuren 3 und 4 ist noch ein Druckbegrenzungsventil 78 an der Kraftstoff-Sammelleitung 42 dargestellt, sowie ein Drucksensor 80, welcher den Kraftstoffdruck in der Kraftstoff-Sammelleitung 42 erfasst. Beide letztgenannten Elemente sind über nicht dargestellte Leitungen mit dem Steuer- und Regelgerät 62 verbunden und ermöglichen so die präzise Einstellung eines gewünschten Kraftstoffdruckes in der Kraftstoff-Sammelleitung 42.

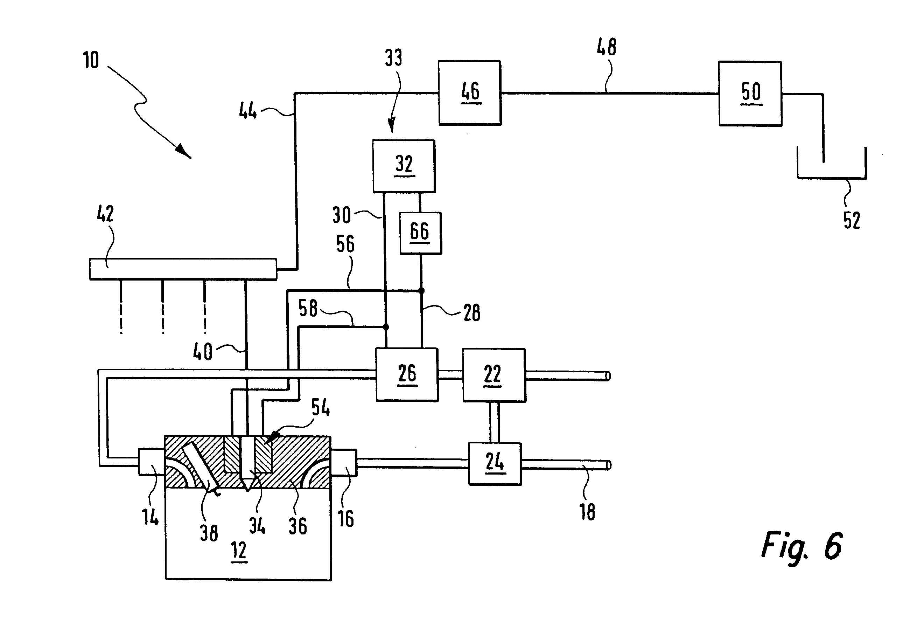

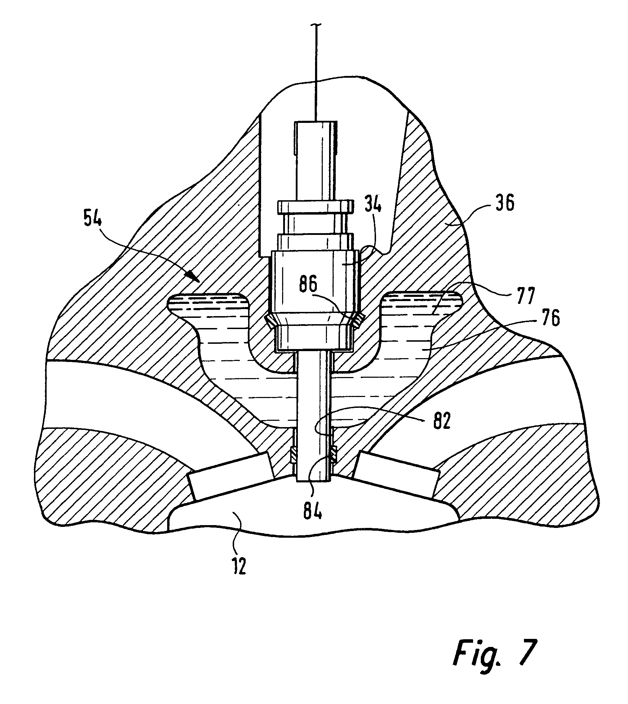

Ein nochmals anderes Ausführungsbeispiel ist in den Figuren 6 und 7 dargestellt. Auch dort tragen solche Elemente und Bereiche, welche äquivalente Funktionen zu Elementen und Bereichen der oben beschriebenen Ausführungsbeispiele aufweisen, die gleichen Bezugszeichen und sind nicht nochmals im Detail erläutert.

Bei der in Figur 6 dargestellten Brennkraftmaschine 10 wird ein in unmittelbarer Nähe zum Injektor 34 gelegener Strömungsraum 76 vom Kühlfluid 77 durchströmt. Der Strömungsraum 76 ist also im Zylinderkopf 36 angeordnet. Er wirkt somit auch zur Kühlung des Zylinderkopfes 36. Wie insbesondere aus Figur 7 ersichtlich ist, ist der Injektor in einer Bohrung 82 im Zylinderkopf 36 befestigt. Der Strömungsraum 76 ist gegenüber dem Brennraum 12 mittels eines Teflonringes 84 abgedichtet. Nach außen zur Umgebung hin ist der Strömungsraum 76 durch einen Teflonring 86 abgedichtet.

Es sei an dieser Stelle darauf hingewiesen, dass der Strömungsraum 76 unabhängig von der sonstigen Kühlung des Motorblocks der Brennkraftmaschine 10 durchströmt wird, der in Figur 6, beziehungsweise in der Figur 7, nicht gesondert dargestellt ist. Ferner sei darauf hingewiesen, dass bei der in den Figuren 6 und 7 dargestellten Brennkraftmaschine 10 keine Proportionalsteuerventile vorgesehen sind. Somit ist die Kühlleistung des zweiten Wärmetauschers 32 und auch des dritten Wärmetauschers 54 im Wesentlichen nicht beeinflussbar. Grundsätzlich ist aber auch bei dem in den Figuren 6 und 7 dargestellten Ausführungsbeispiel eine entsprechende Einstellung der Kühlleistung denkbar, wie sie in dem vorhergehenden Ausführungsbeispiel beschrieben worden ist.

## Patentansprüche

1. Brennkraftmaschine (10), mit einer Einrichtung (22) zur Komprimierung der Ansaugluft, mit einer Kühleinrichtung (33) zur Kühlung der komprimierten Ansaugluft, und mit einer Einspritzvorrichtung (34), mit der der Kraftstoff direkt in einen Brennraum (12) eingespritzt werden kann, **dadurch gekennzeichnet, dass** die Kühleinrichtung (33), mit der die komprimierte Ansaugluft gekühlt wird, mit mindestens einem Wärmetauscher (54) verbunden ist, welcher den Kraftstoff, der der Einspritzvorrichtung (34) zugeführt wird, und/oder einen Einbaubereich (82) der Einspritzvorrichtung (34), und/oder die Einspritzvorrichtung (34) selbst kühlt.

2. Brennkraftmaschine (10) nach Anspruch 1, **dadurch gekennzeichnet, dass** mindestens ein Wärmetauscher (54) mit einer Kraftstoffzuführung (44) stromabwärts von einer Hochdruckpumpe (46) thermisch gekoppelt ist.

3. Brennkraftmaschine (10) nach einem der Ansprüche 1 oder 2, **dadurch gekennzeichnet, dass** mindestens ein Wärmetauscher (54) mit einer Kraftstoff-Sammelleitung (42) thermisch gekoppelt ist, an die die Einspritzvorrichtung (34) angeschlossen ist.

4. Brennkraftmaschine (10) nach Anspruch 3, **dadurch gekennzeichnet, dass** der Wärmetauscher (54) einen Strömungsraum (76) für das Kühlmittel (77) in einer Wand (74) der Kraftstoff-Sammelleitung (42) umfasst.

5. Brennkraftmaschine (10) nach einem der vorhergehenden Ansprüche, **dadurch gekennzeichnet, dass** mindestens ein Wärmetauscher (54) mit einem Zylinderkopf (36) thermisch gekoppelt ist, in den die Einspritzvorrichtung (34) eingebaut ist.

6. Brennkraftmaschine (10) nach Anspruch 5, **dadurch gekennzeichnet, dass** der Wärmetauscher (54) einen Strömungsraum (76) für das Kühlmittel (77) im Zylinderkopf (36) umfasst, der in unmittelbarer Nähe zu der Einspritzvorrichtung (34) liegt.

7. Brennkraftmaschine (10) nach einem der vorhergehenden Ansprüche, **dadurch gekennzeichnet, dass** sie eine Beeinflussungseinrichtung (60) umfasst, mit der die Kühlleistung des Wärmetauschers (54) beeinflusst werden kann.

8. Brennkraftmaschine (10) nach Anspruch 7, **dadurch gekennzeichnet, dass** die Beeinflussungseinrichtung (60) mit einem Steuer- und/oder Regelgerät (62) verbunden ist und abhängig vom Signal mindestens einer Betriebsgröße und/oder von einem Betriebszustand der Brennkraftmaschine (10) angesteuert wird.

9. Brennkraftmaschine (10) nach Anspruch 8, **dadurch gekennzeichnet, dass** die Beeinflussungseinrichtung (60) eine elektrische Kühlmittelpumpe (66, 68) mit veränderlicher Drehzahl und/oder eine ansteuerbare Ventileinrichtung (72) umfasst.
